# EUROPÄISCHE PATENTSCHRIFT

(11) **EP 2 561 415 B1**
(45) Veröffentlichungstag und Bekanntmachung des Hinweises auf die Patenterteilung: **11.09.2013**
(21) Anmeldenummer: 11716231.3
(22) Anmeldetag: 18.04.2011
(51) Int. Cl.: G05B 19/05, G06F 9/445, G06F 13/28

(54) **DATENVERWALTUNGSVERFAHREN UND SPEICHERPROGRAMMIERBARE STEUERUNG**
DATA MANAGEMENT METHOD AND PROGRAMMABLE LOGIC CONTROLLER
PROCÉDÉ DE GESTION DE DONNÉES ET COMMANDE À MÉMOIRE PROGRAMMABLE

(30) Priorität: 19.04.2010 DE 102010027906
(43) Veröffentlichungstag der Anmeldung: 27.02.2013
(73) Patentinhaber: Beckhoff Automation GmbH, 33415 Verl (DE)
(72) Erfinder: JANSSEN, Dirk, 33415 Verl (DE); BARTH, Ramon, 33415 Verl (DE)
(74) Vertreter: Patentanwaltskanzlei WILHELM & BECK
(86) Internationale Anmeldenummer: PCT/EP2011/056165
(87) Internationale Veröffentlichungsnummer: WO 2011/131633

(56) Entgegenhaltungen:
- EP-A1- 1 457 850
- EP-A2- 2 048 561
- US-A1- 2006 143 245
- US-A1- 2007 002 881

## Beschreibung

Die Erfindung betrifft ein Verfahren zum Verwalten von Daten eines Steuerungsprogramms und eine speicherprogrammierbare Steuerung, die insbesondere zur Steuerung oder Regelung einer Maschine oder Anlage eingesetzt wird.

Die speicherprogrammierbare Steuerung (SPS) ist über Sensoren und Aktoren mit der zu steuernden Maschine bzw. Anlage verbunden. Die Sensoren sind an die Eingänge der speicherprogrammierbaren Steuerung angeschlossen und vermitteln der speicherprogrammierbaren Steuerung den Status der Maschine bzw. Anlage. Die Aktoren sind mit den Ausgängen der speicherprogrammierbaren Steuerung verbunden und ermöglichen das Steuern der Maschine oder Anlage. Das auf der speicherprogrammierbaren Steuerung laufende Steuerungsprogramm legt fest, wie die Ausgänge in Abhängigkeit von den Eingängen geschaltet werden sollen. Das Steuerungsprogramm setzt sich dabei in der Regel aus einem oder mehreren im Allgemeinen zyklisch auszuführenden Aufgaben zusammen, die im Weiteren auch als Tasks bezeichnet werden.

Um schnell und kostengünstig Aktualisierungen auf der speicherprogrammierbaren Steuerung vornehmen zu können, die sich z.B. aufgrund eines verbesserten Steuerungsprogramms, geänderter Fertigungsprozesse oder einer neuen Anlagenhardware ergeben, ist es wünschenswert, diese im laufenden Betrieb der speicherprogrammierbaren Steuerung auszuführen, ohne das Steuerungsprogramm unterbrechen zu müssen.

Die Ausführung von Änderungen auf der speicherprogrammierbaren Steuerung bei aktivem Steuerungsprogramm gestaltet sich insbesondere dann als schwierig, wenn die Änderung Daten des Steuerungsprogramms betrifft. Wenn sich beispielsweise die Parameter des Steuerungsprogramms ändern bzw. wenn ein neuer Parameter hinzukommt, führt dies zu einer veränderten Datenstruktur der Steuerungsprogrammdaten. Um die Änderung durchzuführen, muss die Datenstruktur der Steuerungsprogrammdaten im Datenspeicher der speicherprogrammierbaren Steuerung neu angelegt werden, wobei neue Datenfelder, die neue oder geänderte Parameter enthalten, initialisiert und die nicht veränderten Daten aus der ursprünglichen Datenstruktur in die neue Datenstruktur kopiert werden müssen. Sind große Teile der Steuerungsprogrammdaten von der Änderung betroffen, d.h. sind zahlreiche neue Datenstrukturen erforderlich, zieht dies einen umfangreiche Kopiervorgang zur Übertragung der nicht veränderten Daten von der alten Datenstruktur auf die neue Datenstruktur nach sich.

Um sicherzustellen, dass das Steuerungsprogramm immer mit den aktuellen Daten arbeitet, wird die Übertragung der nicht veränderten Daten aus der alten Datenstruktur in die neue Datenstruktur in einer Steuerungsprogrammpause, die in der Regel mit einem Umschalten von dem alten Steuerungsprogramm auf ein neues Steuerungsprogramm zusammenfällt, ausgeführt. Müssen große Datenmengen umkopiert werden, kann der Kopiervorgang zu einer Zeitüberschreitung der Steuerungsprogrammpause führen und damit zu einer Fehlfunktion der Steuerung. Dies gilt insbesondere dann, wenn das Steuerungsprogramm schnelle Tasks enthält, die nur kurze Zykluspausen erlauben.

Das Dokument EP 1 457 850 A1 betrifft ein Verfahren zum Aktualisieren einer speicherprogrammierbaren Steuerung während eines laufenden Steuerprogramms. Hierzu wird bei laufendem Steuerprogramm das geänderte Steuerprogramm lauffähig installiert und die neuen Programmdaten aufgespielt und zwar indem in einem zusätzlichen Speicherbereich die ursprünglichen Programmdaten mit den neuen Programmdaten aktualisiert werden. Der Umkopiervorgang kann dabei scheibchenweise in Steuerprogrammpausen erfolgen. Jedoch erst nachdem alle Daten vollständig umkopiert sind, wird dann vom alten Steuerprogramm auf das neue Steuerprogramm mit den aktualisierten Programmdaten im zusätzlichen Speicherbereich umgeschaltet.

Zielsetzung der Erfindung ist es, ein Verfahren zum Verwalten von Daten eines Steuerungsprogramms und eine speicherprogrammierbare Steuerung bereitzustellen, die schnell und zuverlässig Änderungen von Steuerungsprogrammdaten ermöglichen.

Diese Aufgabe wird mit einem Verfahren gemäß Anspruch 1 und einer Steuerung gemäß Anspruch 7 gelöst. Bevorzugte Weiterbildungen sind in den abhängigen Ansprüchen angegeben.

Gemäß der Erfindung sind die Daten eines auf einer Steuerung ausgeführten Steuerungsprogramms in Datenbereiche aufgeteilt, die in einem Datenspeicher der Steuerung abgelegt sind. Jedem Datenbereich ist dabei ein Verfügbarkeitsstatus zugeordnet, der in einer Verfügbarkeitstabelle einer Speicherverwaltungseinheit gespeichert ist. Zum Ausführen einer Änderung in einem Datenbereich legt eine Konfigurationseinheit der Steuerung im Datenspeicher einen weiteren Datenbereich mit der Änderung an, trägt einen Verfügbarkeitsstatus für den weiteren Datenbereich mit der Änderung in die Verfügbarkeitstabelle der Speicherverwaltungseinheit ein und überträgt nicht zu verändernde Daten des zu ändernden Datenbereichs auf den weiteren Datenbereich mit der Änderung. Die Konfigurationseinheit setzt dabei bis zum Abschluss des Übertragungsvorgangs den dem weiteren Datenbereich mit der Änderung den zugeordneten Verfügbarkeitsstatus in der Verfügbarkeitstabelle auf nicht verfügbar. Eine Prozessoreinheit zum Ausführen des Steuerungsprogramms prüft vor einem Zugriff des Steuerungsprogramms auf einen Datenbereich den dem Datenbereich zugeordneten Verfügbarkeitsstatus, wobei bei Feststellen eines als nicht verfügbar gekennzeichneten Datenbereichs das Steuerungsprogramm angehalten wird, bis der zugeordnete Verfügbarkeitsstatus in der Verfügbarkeitstabelle auf verfügbar gesetzt ist.

Mit der erfindungsgemäßen Vorgehensweise einer Aufteilung der Steuerungsprogrammdaten in Datenbereiche, die jeweils bei einer Änderung der Steuerungsprogrammdaten getrennt voneinander aktualisiert werden, kann der erforderliche Kopiervorgang der nicht zu verändernden Daten bei einer Änderung der Steuerungsprogrammdaten zeitlich verteilt ausgeführt werden. Der Kopiervorgang muss so nicht in einer einzigen Steuerungsprogrammpause erfolgen, sondern kann auf mehrere Steuerungsprogrammpausen zeitlich verteilt werden, wodurch eine Zeitüberschreitung vermieden werden kann.

Gemäß einer bevorzugten Ausführungsform wird von der Konfigurationseinheit zusätzlich eine Änderung von Programmelementen des Steuerungsprogramms ausgeführt, wobei während das unveränderte Steuerungsprogramm läuft, das geänderte Steuerungsprogramm lauffähig installiert und nach Abschluss der Installation in einer Steuerungsprogrammpause auf das geänderte Steuerungsprogramm umgeschaltet wird. Die Konfigurationseinheit ist dabei so ausgelegt, dass der Übertragungsvorgang der nicht zu verändernden Daten des zu verändernden Datenbereiches auf den weiteren Datenbereich mit der Änderung nach dem Umschaltvorgang durchgeführt wird. Diese Vorgehensweise sorgt dafür, dass die Änderung des Steuerungsprogramms Hand in Hand mit der Aktualisierung der Steuerungsprogrammdaten erfolgt. Durch das Verzögern des Kopiervorgangs der nicht zu verändernden Steuerungsprogrammdaten in die geänderte Datenstruktur auf einen Zeitpunkt nach dem Umschalten vom alten Steuerungsprogramm auf das neue Steuerungsprogramm ist gewährleistet, dass das ausgeführte Steuerungsprogramm immer die aktuellen Steuerungsprogrammdaten nutzt, wodurch Fehlfunktionen der Steuerung vermieden werden.

Gemäß einer weiteren bevorzugten Ausführungsform wird der Übertragungsvorgang der nicht zu verändernden Daten des zu ändernden Datenbereichs auf den weiteren Datenbereich mit der Änderung durch den ersten Zugriff des geänderten Steuerungsprogramms auf den weiteren Datenbereich mit der Änderung ausgelöst. Diese Vorgehensweise sorgt für eine optimale zeitliche Aufteilung des Kopiervorgangs der Daten aus der alten Datenstruktur in die neue Datenstruktur der Steuerungsprogrammdaten, da immer nur die tatsächlich benötigten Daten, nämlich Daten in dem Datenbereich, auf den das Steuerungsprogramm aktuell zugreifen möchte, kopiert werden.

Steuerungsprogrammdaten umfassen häufig sehr große Datenstrukturen, beispielsweise wenn verschiedene Parametersätze, im Weiteren auch Rezepte genannt, vorhanden sind. In der Regel wird vom Steuerungsprogramm jedoch nur eine Rezeptur ausgeführt, so dass bei einer Änderung der Datenstruktur der Steuerungsprogrammdaten der Kopiervorgang nur für die aktuell aktive Rezeptur ausgeführt wird, was mit dem ersten Zugriff auf diese Rezeptur erfolgt. Ist das Steuerungsprogramm in mehrere Tasks aufgeteilt, beispielsweise schnelle Tasks mit kurzen Zykluszeiten, die nur wenige Daten nutzen, und langsame Tasks mit langen Zykluszeiten, die viele Daten nutzen, kann durch das Auslösen des Kopiervorgangs für einen neuen Datenbereich durch den ersten Zugriff einer Task auf diesen neuen Datenbereich erreicht werden, dass immer nur die der Task zugeordneten Daten aktualisiert werden, was dann zuverlässig in den Zykluspausen, insbesondere auch in den kurzen Zykluspausen der schnellen Tasks, erfolgen kann.

Gemäß einer weiteren bevorzugten Ausführungsform wird dann, wenn eine Änderung in einer Mehrzahl von Datenbereichen ausgeführt wird, jeweils für mindestens einen weiteren Datenbereich mit der Änderung in einer Steuerungsprogrammpause der Vorgang der Übertragung der nicht veränderten Daten des zu ändernden Datenbereichs auf den weiteren Datenbereich mit der Änderung durchgeführt. Diese Vorgehensweise sorgt dafür, dass das Datenumkopieren sukzessive erfolgt und zwar immer dann, wenn sich ein Zeitfenster in Form von Steuerungsprogrammpausen ergibt. So wird gewährleistet, dass ein schneller Umkopiervorgang ausgeführt wird, ohne dass das laufende Steuerungsprogramm durch den Umkopiervorgang gestört wird.

Gemäß einer weiteren bevorzugten Ausführungsform wird nach Abschluss des Übertragungsvorgangs der zu verändernde Datenbereich freigegeben und der zugeordnete Verfügbarkeitsstatus in der Verfügbarkeitstabelle gelöscht. Hierdurch wird vermieden, dass unnötig Speicherplatz mit veralteten Steuerungsprogrammdaten belegt wird, was dann z.B. ein schnelles weiteres Update des Steuerungsprogramms bzw. der Steuerungsprogrammdaten blockieren könnte.

Gemäß einer weiteren bevorzugten Ausführungsform sind die Datenbereiche in Datenfelder aufgeteilt, wobei in dem weiteren Datenbereich mit der Änderung das von der Änderung betroffene Datenfeld initialisiert wird. Diese Vorgehensweise vereinfacht das Anlegen der neuen Datenstruktur, da nur die Datenfelder mit den Änderungen initialisiert werden. Eine Initialisierung der übrigen Datenfelder ist nicht notwendig, da diese beim Umkopiervorgang mit den nicht zu verändernden Daten des alten Datenbereichs aufgefüllt werden.

Die Erfindung wird anhand der beigefügten Zeichnungen näher erläutert. Es zeigen:
Figur 1 eine schematische Übersicht einer Produktionsanlage mit einer speicherprogrammierbaren Steuerung;
Figur 2 ein Ablaufdiagramm zum Durchführen von Änderungen bei einer laufenden speicherprogrammierbaren Steuerung; und
Figur 3 einen Übertragungsvorgang von Steuerungsprogrammdaten.

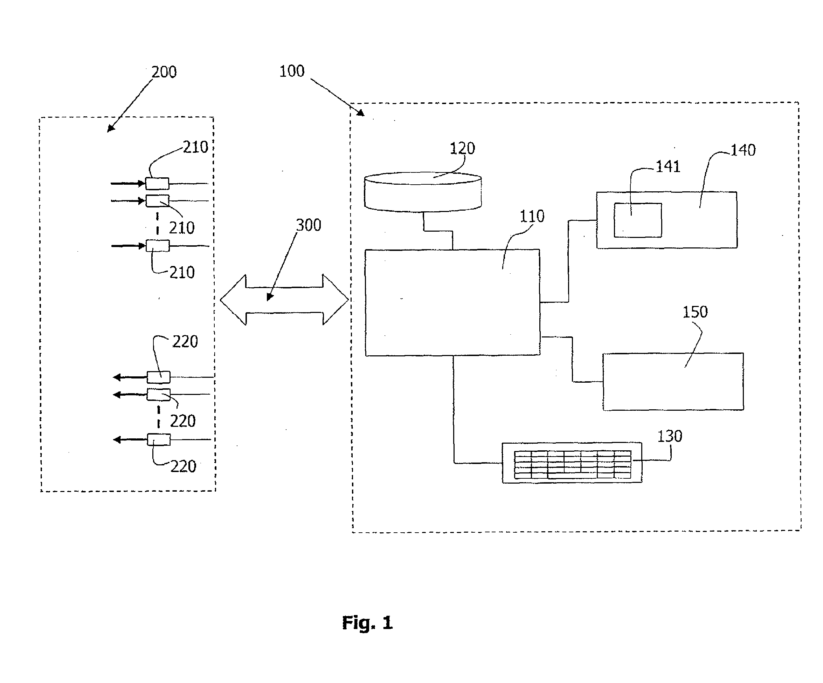

Die Steuerung von Maschinen- und Produktionsanlagen erfolgt häufig auf der Basis von speicherprogrammierbaren Steuerungen (SPS). Figur 1 zeigt eine von einer speicherprogrammierbaren Steuerung 100 gesteuerte Produktionsanlage 200. Die Produktionsanlage 200 umfasst eine Vielzahl von Sensoren 210, die das Geschehen in der Produktionsanlage erfassen, und eine Vielzahl von Aktoren 220, mit denen sich eine Aktion bzw. ein Effekt in der Produktionsanlage 200 hervorrufen lässt. Die Sensoren 210 können passiv oder aktiv ein Signal zur Erfassung einer Messgröße erzeugen oder durch äußere Energieaufnahme die Messgröße erfassen und dabei die Messgröße digital oder analog aufnehmen. Die Aktoren 220 bilden das wandlerbezogene Gegenstück zu den Sensoren 210 und setzen Signale in mechanische oder elektrische Arbeit um. Die Sensoren 210 und Aktoren 220 der Produktionsanlage 200 sind über einen Übertragungsweg 300, in der Regel einem Feldbus, mit der speicherprogrammierbaren Steuerung 100 verbunden.

Es besteht dabei die Möglichkeit, dass am Feldbus mehrere Anlagen bzw. speicherprogrammierbare Steuerungen angeschlossen sind. Die speicherprogrammierbaren Steuerungen bilden dann die aktiven Busteilnehmer und besitzen eine Buszugriffsberechtigung, um Daten ohne externe Anforderungen auf den Feldbus auszugeben. Die Produktionsanlagen bzw. die Sensoren und Aktoren der Produktionsanlagen bilden die passiven Busteilnehmer, die keine Buszugriffsberechtigung besitzen und nur empfangene Daten quittieren bzw. auf Anfrage eines aktiven Busteilnehmers, also einer speicherprogrammierbaren Steuerung, Daten an diese übermitteln dürfen.

Die Sensoren 210 der Produktionsanlage 200 sind auf die Eingänge der speicherprogrammierbaren Steuerung 100 geschaltet, die Aktoren 220 auf die Ausgänge der speicherprogrammierbaren Steuerung 100. Das auf einer Prozessoreinheit 110 der speicherprogrammierbaren Steuerung 100 laufende Steuerungsprogramm legt dann mit Hilfe von Steuerungsprogrammdaten fest, wie die Ausgänge in Abhängigkeit von den Eingängen geschaltet werden sollen. Das Steuerungsprogramm und die Steuerungsprogrammdaten sind in einem Datenspeicher 120 der speicherprogrammierbaren Steuerung 100 abgelegt.

Speicherprogrammierbare Steuerungen arbeiten dabei in der Regel zyklusorientiert, wobei ein echtzeitfähiges Betriebssystem der Prozessoreinheit 110 den Zyklus kontrolliert. Das Echtzeit-Betriebssystem aktualisiert das an den Eingängen der speicherprogrammierbaren Steuerung von den Sensoren 210 der Produktionsanlage 200 ausgelegte Eingangsprozessabbild und übergibt dieses an das Steuerungsprogramm. Nach Abarbeitung der Steuerungsprogrammanweisungen übergibt das Steuerungsprogramm dann ein Ausgangsprozessabbild an das Betriebssystem, das dann vom Echtzeit-Betriebssystem über die Ausgänge zu den Aktoren 220 der Produktionsanlage 200 weitergeleitet wird.

Anschließend beginnt der Steuerungszyklus von vorne. Die Zykluszeit kann dabei fest vorgegeben oder auch asynchron ausgelegt sein.

Ferner kann das Steuerungsprogramm aus mehreren zyklisch auszuführenden Aufgaben, im Weiteren auch als Tasks bezeichnet, bestehen, die jeweils unterschiedliche Zykluszeiten aufweisen. Jeder Task wird dann ein entsprechendes Eingangsprozessbild geliefert, das von Anweisungen der Task in ein Ausgangsprozessabbild übersetzt wird. Die einzelnen Prozessabbilder können dabei unterschiedlich groß sein, also unterschiedliche Datenmengen besitzen. Schnelle Tasks des Steuerungsprogramms benötigen dabei oft nur wenige Prozessdaten, während langsamere Tasks meist große Prozessdatenmengen verarbeiten.

Speicherprogrammierbare Steuerungen arbeiten häufig auch als Rezeptursteuerungssysteme, bei denen das Steuerungsprogramm unterschiedliche Rezepte ausführen kann, die jeweils einem Produkt, das produziert, bzw. einem Prozess, der durchgeführt werden soll, zugeordnet sind. Die Rezepte bestehen dabei aus einer Wertesammlung von Parametern, z.B. Temperatur, Luftfeuchtigkeit, Geschwindigkeit, etc. die von den Anweisungen des Steuerungsprogramms bzw. der Tasks des Steuerungsprogramms als Sollwertvorgaben aufgerufen werden.

Bei Änderungen im Prozess- und Fertigungsablauf der zu steuernden Anlage bzw. bei Änderungen an der Anlagenhardware, z.B. den Sensoren und Aktoren, ist es in der Regel erforderlich, die speicherprogrammierbare Steuerung zu aktualisieren. Eine solche Aktualisierung kann das Steuerungsprogramm, d.h. die Steuerungsanweisungen, betreffen, aber auch die in der speicherprogrammierbaren Steuerung abgespeicherten Steuerungsprogrammdaten zur Ausführung der Steuerungsanweisungen, z.B. die Rezepte. Bei der Änderung der Steuerungsprogrammdaten tritt häufig der Fall auf, dass ein Datenfeld, das einen Parameter enthält, neu hinzukommt, bzw. ein Datenfeld mit einem Parameter durch ein anderes Datenfeld ersetzt wird, die übrigen Datenfelder jedoch beibehalten werden.

Das Aktualisieren der speicherprogrammierbaren Steuerung bei angehaltenem Steuerungsprogramm ist in der Regel problemlos. Über eine Schnittstelle 130 der speicherprogrammierbaren Steuerung 100 werden dann einfach das geänderte Steuerungsprogramm und die geänderten Steuerungsprogrammdaten eingespielt. Es ist jedoch wünschenswert, die Aktualisierung der speicherprogrammierbaren Steuerung auch bei laufendem Steuerungsprogramm, online vornehmen zu können, um oft kostspielige Unterbrechungen der Fertigungsprozesse bzw. einen Anlagenstillstand zu vermeiden. Dabei gestaltet sich die Ausführung von Änderungen an der speicherprogrammierbaren Steuerung bei laufendem Steuerungsprogramm, insbesondere in Bezug auf Änderungen der Steuerungsprogrammdaten, als schwierig. Es besteht zwar die Möglichkeit, die neuen Steuerungsprogrammdaten ähnlich wie das neue Steuerungsprogramm parallel zum laufenden Steuerungsprogramm über die Schnittstelle 130 auf den Datenspeicher 120 der speicherprogrammierbaren Steuerung 100 aufzuspielen. Beim Umschalten vom alten Steuerungsprogramm auf das neue Steuerungsprogramm sollten jedoch die Steuerungsprogrammdaten, die vom neuen Steuerungsprogramm weiter verwendet werden, aktuell sein, um einen reibungslosen Übergang ohne Fehlfunktionen der Steuerung zu gewährleisten. Hierbei ist es in der Regel erforderlich, eine große Steuerungsprogrammdatenmenge vom alten Steuerungsprogramm für das neue Steuerungsprogramm zu übernehmen. Um eine Unterbrechung des laufenden Steuerungsprogramms so kurz wie möglich zu halten, ist es wünschenswert, insbesondere diesen Datenübertragungsvorgang in einer Steuerungsprogrammpause, also in der Regel in einer Pause zwischen aufeinanderfolgenden Steuerzyklen, durchzuführen. Mit der erfindungsgemäßen Vorgehensweise kann insbesondere der Datenkopiervorgang der weiterhin verwendeten Steuerungsprogrammdaten aus dem alten Steuerungsprogramm in das neue Steuerungsprogramm zeitlich optimal verteilt werden, so dass Zeitüberschreitungen der Steuerungsprogrammpausen, die zu Fehlfunktionen der Steuerung führen könnten, vermieden werden.

Wie Figur 1 gezeigt, weist die speicherprogrammierbare Steuerung 100 neben der Prozessoreinheit 110, die einen oder mehrere Rechenkerne umfassen kann, die mit dem EchtzeitBetriebssystem der speicherprogrammierbaren Steuerung betrieben werden, dem Datenspeicher 120, in dem das Steuerungsprogramm und die Steuerungsprogrammdaten abgespeichert sind, und der Schnittstelle 130, eine Speicherverwaltungseinheit 140 und eine Konfigurationseinheit 150 auf. Die Speicherverwaltungseinheit 140 und die Konfigurationseinheit 150 können dabei hardwaremäßig in der speicherprogrammierbaren Steuerung implementiert sein oder auch in Form von Software.

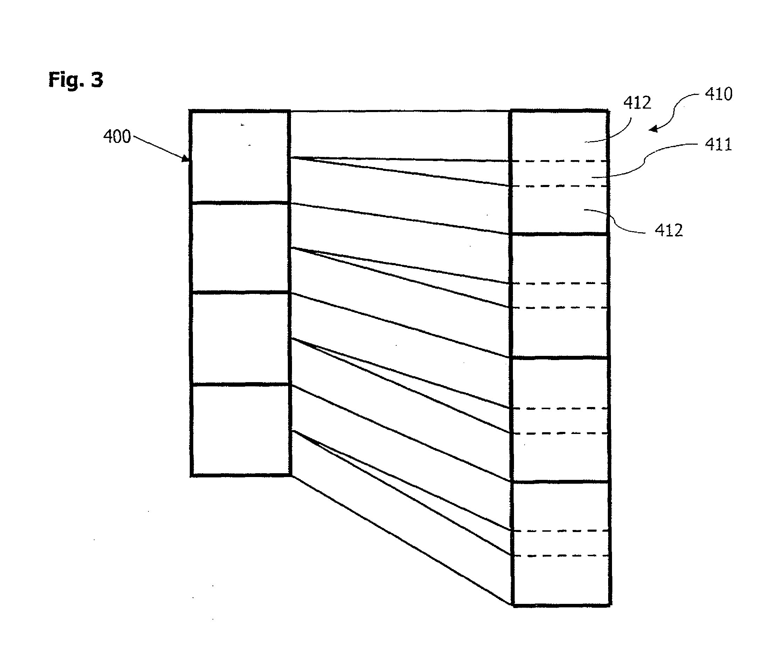

Die Steuerungsprogrammdaten sind, wie in Figur 3 dargestellt, im Datenspeicher 120 in Form von Datenbereichen 400 organisiert, wobei bei der in Figur 3 dargestellten Ausführungsform vier Datenbereiche mit Steuerungsprogrammdaten gezeigt sind. Der Datenspeicher 120 wird von der Speicherverwaltungseinheit 140 verwaltet, wobei die Speicherverwaltungseinheit 140 eine Verfügbarkeitstabelle 141 aufweist, die für jeden Datenbereich 400 der Steuerungsprogrammdaten ein Verfügbarkeitsstatus enthält. Der Verfügbarkeitsstatus kann als 1-Bit-Datenfeld in der Verfügbarkeitstabelle 141 ausgeführt sein, das zwischen "0" und "1" geschaltet wird, wobei der Datenwert "0" anzeigt, dass der zugehörige Datenbereich nicht verfügbar ist und der Datenwert 1, dass der zugehörige Datenbereich verfügbar ist.

Die Prozessoreinheit 110 überprüft vor jedem Zugriff auf die Daten eines Datenbereichs den dem entsprechenden Datenbereich in der Verfügbarkeitstabelle 141 zugeordneten Verfügbarkeitsstatus, wobei die Prozessoreinheit 110 den Zugriff nur dann ausführt, wenn der Datenbereich als verfügbar markiert ist. Im Fall, dass der Datenbereich als nicht verfügbar markiert ist, hält die Prozessoreinheit 110 das Steuerungsprogramm an und setzt es erst dann fort, wenn der Verfügbarkeitsstatus für den entsprechenden Datenbereich auf verfügbar umgeschaltet hat. Gleichzeitig mit dem Anhalten des Steuerungsprogramms signalisiert die Prozessoreinheit 110 der Konfigurationseinheit 150 den als nicht verfügbar gekennzeichneten Datenbereich. Die Konfigurationseinheit 150 löst dann einen Datenkopiervorgang für den Datenbereich aus, und setzt nach Abschluss der Datenübertragung den Verfügbarkeitsstatus in der Verfügbarkeitstabelle 141 für den Datenbereich auf verfügbar, woraufhin die Prozessoreinheit 110 den gewünschten Zugriff ausführt und das Steuerungsprogramm fortsetzt. Diese Vorgehensweise dient insbesondere zur Online-Aktualisierung der Steuerungsprogrammdaten.

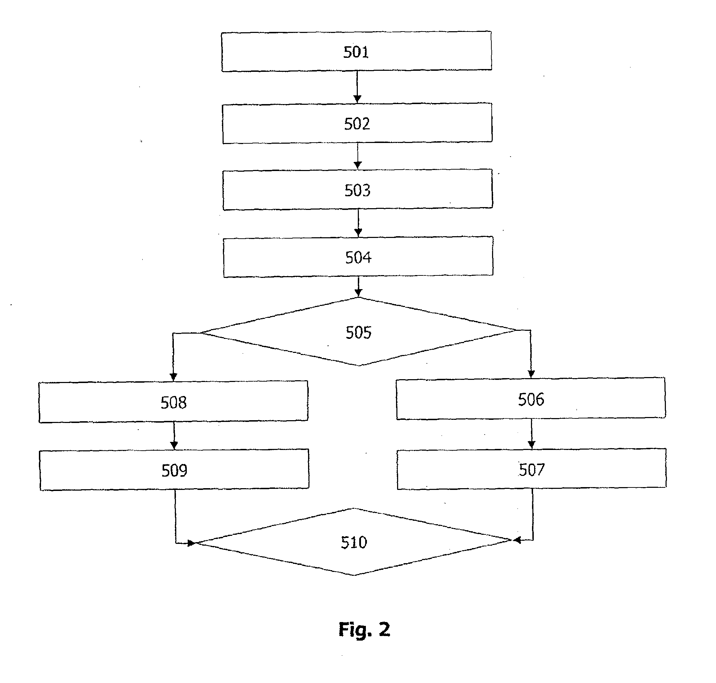

Figur 2 zeigt ein Ablaufdiagramm zur Ausführung einer Aktualisierung der speicherprogrammierbaren Steuerung 100. Im Schritt 501 wird der Aktualisierungsvorgang der speicherprogrammierbaren Steuerung gestartet. Auf der Prozessoreinheit 110 der speicherprogrammierbaren Steuerung wird noch das alte Steuerungsprogramm ausgeführt, wobei die verschiedenen Tasks entsprechend den vorgegebenen Zykluszeiten abgearbeitet werden, indem die zugehörigen Eingangsprozessabbilder der Sensoren in Ausgangsprozessabbilder für die Aktoren umgesetzt werden.

Über die Schnittstelle 130 der speicherprogrammierbaren Steuerung wird im Schritt 502 das neue Steuerungsprogramm durch die Konfigurationseinheit 150 im Datenspeicher 120 installiert. Im Datenspeicher 120 liegen dann lauffähig das alte Steuerungsprogramm und das neue Steuerungsprogramm vor, wobei die Prozessoreinheit 110 nach wie vor das alte Steuerungsprogramm ausführt. Änderungen im neuen Steuerungsprogramm gegenüber dem alten Steuerungsprogramm können sich dabei auf einzelne Programmelemente oder auch ganze Tasks beziehen.

Im Schritt 503 werden dann über die Schnittstelle 130 die neuen Speicherprogrammdaten von der Konfigurationseinheit 150 in den Datenspeicher 120 der speicherprogrammierbaren Steuerung 100 eingespielt. Die Konfigurationseinheit 150 legt hierzu im Datenspeicher 120 neue Datenbereiche 410 für die neuen Steuerungsprogrammdaten an, wie in Figur 3 dargestellt ist. Die Änderung der Steuerungsprogrammdaten kann sich dabei auf vollständige Datenbereiche, z.B. dann, wenn eine komplett neue Rezeptur eingespielt wird, oder auf einzelne Datenfelder 411 in den Datenbereichen beziehen, wie in Figur 3 gezeigt ist. Auch dann, wenn die Änderung der Steuerprogrammdaten nur ein Datenfeld in einem Datenbereich betrifft, wird, wie in Figur 3 weiter gezeigt ist, im Datenspeicher 120 der gesamte Datenbereich neu angelegt. Um den Einspielvorgang zu verkürzen, initialisiert die Konfigurationseinheit 150 jedoch nur das geänderte Datenfeld 411 mit den eingespielten neuen Steuerungsprogrammdaten. Die gegenüber dem alten Datenbereich unveränderten Datenfelder 412 im neuen Datenbereich 410 werden dagegen vorzugsweise mit einem einheitlichen Wert, z.B. einer digitalen 0 beschrieben.

Im Schritt 504 nach Anlegen der neuen Datenbereiche 410 erzeugt die Konfigurationseinheit 150 in der Verfügbarkeitstabelle 141 der Speicherverwaltungseinheit 140 für jeden neuen Datenbereich einen Verfügbarkeitsstatus. Die Konfigurationseinheit 150 setzt den neu eingetragenen Verfügbarkeitsstatus dann, wenn der neue Datenbereich komplett initialisiert wurde, auf verfügbar. Wenn jedoch im neuen Datenbereich nur einzelne Datenfelder initialisiert sind, wie in Figur 3 gezeigt ist, setzt die Konfigurationseinheit 150 den zugeordneten Verfügungsstatus auf nicht verfügbar.

Im Schritt 505 wird die Änderung in der speicherprogrammierbaren Steuerung aktiviert. Das Umschalten wird durch eine entsprechende Eingabe über die Schnittstelle 130 ausgelöst, wobei die Konfigurationseinheit 150 den Umschaltvorgang so lange verzögert, bis das alte Steuerungsprogramm seinen laufenden Steuerzyklus abgeschlossen hat. In der darauffolgenden Steuerungsprogrammpause setzt die Konfigurationseinheit 150 dann den Zeiger in der Prozessoreinheit 110, der auf das aufzurufende Steuerungsprogramm im Datenspeicher 120 verweist, vom alten Steuerungsprogramm auf das neue Steuerungsprogramm um. Im nächsten Steuerungszyklus werden dann die Anweisungen des neuen Steuerungsprogramms ausgeführt. Der Umschaltvorgang vom alten Steuerungsprogramm auf das neue Steuerungsprogramm kann auch direkt von der Konfigurationseinheit 150 ausgelöst werden, wenn die lauffähige Installation des neuen Steuerungsprogramms und das Erzeugen der neuen Datenbereiche für die Steuerungsprogrammdaten abgeschlossen ist.

Die Prozessoreinheit 110 prüft bei der Ausführung des neuen Steuerungsprogramms vor einem Zugriff auf Steuerungsprogrammdaten weiter den Verfügbarkeitsstatus des zugehörigen Datenbereichs in der Verfügbarkeitstabelle 141 der Speicherverwaltungseinheit 140. Wenn der Datenbereich als verfügbar gekennzeichnet ist, greift die Prozessoreinheit 110 auf den entsprechenden Datenbereich in dem Datenspeicher 120 zu und setzt die Ausführung des Steuerungsprogramms fort. Wenn der Verfügbarkeitsstatus der Prozessoreinheit 110 anzeigt, dass der Datenbereich nicht verfügbar ist, also es sich um einen geänderten Datenbereich 410 mit einem neuen Datenfeld 411 handelt, unterbricht die Prozessoreinheit 110 die Ausführung des Steuerungsprogramms im Schritt 506 und triggert die Konfigurationseinheit 150, die daraufhin, wie in Figur 3 gezeigt, einen Kopiervorgang im Datenspeicher 120 auslöst, bei der die nicht initialisierten Datenfelder 412 des Datenbereichs 410, auf den die Prozesseinheit 410 zugreifen möchte, mit den entsprechenden Daten aus dem alten Datenbereich 400 aufgefüllt werden.

Nach Ende des Umkopiervorgangs der weiter benötigten Daten vom alten Datenbereich 400 in den neuen Datenbereich 410 setzt die Konfigurationseinheit 150 den Verfügbarkeitsstatus des neuen Datenbereichs im Schritt 507 auf verfügbar und signalisiert der Prozessoreinheit 110 die Verfügbarkeit des neuen Datenbereichs, die daraufhin die Ausführung des Steuerungsprogramms an der unterbrochenen Stelle fortsetzt und auf den nun verfügbaren neuen Datenbereich zugreift. Weiterhin löscht die Konfigurationseinheit 150 den Verfügbarkeitsstatus des alten Datenbereichs 400 aus der Verfügbarkeitstabelle 141 in der Speicherverwaltungseinheit 140 und gibt so den alten Datenbereich frei.

Gemäß der dargestellten Vorgehensweise wird also der Datenkopiervorgang der nicht zu verändernden Daten aus dem alten Datenbereich in den neuen Datenbereich immer erst dann ausgeführt, wenn ein erster Zugriff auf den neuen Datenbereich durch das geänderte Steuerungsprogramm erfolgt. Mit dieser Vorgehensweise wird eine optimale zeitliche Aufteilung des Datenkopiervorgangs erreicht, da immer nur die vom Steuerungsprogramm tatsächlich benötigten Daten, nämlich die Daten, auf die das Steuerungsprogramm aktuell zugreifen möchte, kopiert werden, wodurch sich schnelle Kopiervorgänge ergeben, die nur zu einer kurzen Steuerungsprogrammunterbrechung führen und somit verhindern, dass aufgrund des Datenkopiervorgangs Zeitüberschreitungen bei der Steuerungsprogrammausführung auftreten.

Der Umschaltvorgang 505 im in Figur 2 gezeigten Ablauf stößt ferner eine Programmroutine in der Konfigurationseinheit 150 an. Wenn die Prozessoreinheit 110 der Konfigurationseinheit 150 eine Steuerungsprogrammpause signalisiert, prüft im Schritt 508 die Konfigurationseinheit 150 anhand der Verfügbarkeitstabelle 141, ob nicht verfügbare Datenbereiche vorliegen, und führt dann für wenigstens einen als nicht verfügbar gekennzeichneten Datenbereich einen Datenkopiervorgang der nicht zu verändernden Daten aus dem alten Datenbereich in die nicht initialisierten Datenfelder des zugehörigen neuen Datenbereichs durch. Nach Abschluss des Kopiervorgangs setzt die Konfigurationseinheit 150 dann den Verfügbarkeitsstatus des neuen Datenbereichs im Schritt 509 auf verfügbar und löscht gleichzeitig den Verfügbarkeitsstatus des alten Datenbereichs aus der Verfügbarkeitstabelle 141, um den Datenbereich freizugeben.

Im Schritt 510 prüft die Konfigurationseinheit 150 ferner laufend, ob in der Verfügbarkeitstabelle 141 noch auf nicht verfügbar gesetzte Datenbereiche vorhanden sind. Wenn der Verfügbarkeitsstatus für alle Datenbereiche in der Verfügbarkeitstabelle 141 der Speicherverwaltungseinheit 140 verfügbar signalisiert, beendet die Konfigurationseinheit 150 den Umschaltvorgang und signalisiert gleichzeitig, dass ein neuer Umschaltvorgang ausführbar ist.

Mit der erfindungsgemäßen Vorgehensweise, die Steuerungsprogrammdaten in Datenbereiche aufzuteilen, die jeweils eigenständig bei einer Änderung von Steuerungsprogrammdaten aktualisiert werden, kann der erforderliche Datenkopiervorgang für nicht veränderte Daten aus alten Datenbereichen in neue Datenbereiche zeitlich verteilt ausgeführt werden. Der Kopiervorgang wird dabei vorzugsweise durch den ersten Zugriff des neuen Steuerungsprogramms auf den neuen Datenbereich ausgelöst. Zusätzlich kann auch mit Hilfe einer Programmroutine in Steuerungsprogrammpausen jeweils abgestimmt auf die Pausenlänge ein Kopiervorgang für ein oder mehrere Datenbereiche durchgeführt werden. Durch die zeitlich verteilte Ausführung des Kopiervorgangs kann gewährleistet werden, dass es zu keinen unnötig langen Steuerungsprogrammunterbrechungen aufgrund des erforderlichen Kopiervorgangs kommt, die dann zur Zeitüberschreitung und Steuerungsfehlern führen würden.

## Patentansprüche

1. Verfahren zum Aktualisieren einer speicherprogrammierbaren Steuerung bei laufendem Steuerungsprogramm, wobei Programmdaten des Steuerungsprogramms in Datenbereiche mit Datenfeldern aufgeteilt sind und jedem Datenbereich ein Verfügbarkeitsstatus zugeordnet ist, der in einer Verfügbarkeitstabelle gespeichert ist und vor einem Zugriff des Steuerungsprogramms auf den Datenbereich geprüft wird,
wobei, während ein unverändertes Steuerungsprogramm läuft, ein geändertes Steuerungsprogramm lauffähig installiert wird und neue Programmdaten ein gespielt werden, in dem weitere Datenbereiche mit den neuen Programmdaten angelegt wird, wobei, wenn die neuen Programmdaten eine Änderung in einzelnen Datenfelder eines alten Datenbereichs betreffen, ein gesamter Datenbereich neu angelegt wird,
die von der Änderung betroffenen Datenfelder mit den neuen Programmdaten initialisiert werden und dem neuen Datenbereich als Verfügbarkeitsstatus nicht verfügbar zugeordnet wird,
wobei nach Abschluss der Installation und dem Einspielen in einer Steuerungsprogrammpause auf das geänderte Steuerungsprogramm umgeschaltet wird,
wobei bei der Ausführung des geänderten Steuerungsprogramms vor einem Zugriff auf Programmdaten weiter der Verfügbarkeitsstatus des zugehörigen Datenbereichs in der Verfügbarkeitstabelle geprüft wird, wobei wenn der Verfügbarkeitsstatus anzeigt, dass der Datenbereich nicht verfügbar ist die Ausführung des geänderten Steuerungsprogramms unterbrochen und einen Umkopiervorgang auslöst, bei der die nicht initialisierten Datenfelder des neuen Datenbereichs mit den entsprechenden Programmdaten aus dem alten Datenbereich aufgefüllt werden, und
wobei nach Abschluss des Umkopiervorgangs der Verfügbarkeitsstatus des neuen Datenbereichs auf verfügbar gesetzt und die Ausführung des geänderten Steuerungsprogramms an der unterbrochenen Stelle fortgesetzt wird

2. Verfahren nach Anspruch 1, wobei eine Programmdaten-Änderung in einzelnen Datenfelder in einer Mehrzahl der neuen Datenbereiche ausgeführt wird, wobei ein Umkopiervorgang, bei der die nicht initialisierten Datenfelder des neuen Datenbereichs mit den entsprechenden Programmdaten aus dem alten Datenbereiche aufgefüllt werden, H für mindestens einen neuen Datenbereich in einer Steuerungsprogrammpause durchgeführt wird.

3. Verfahren nach Anspruch 1 oder 2, wobei nach Abschluss des Umkopiervorgangs der zu ändernde Datenbereich freigegeben wird und der zugeordnete Verfügbarkeitsstatus in der Verfügbarkeitstabelle gelöscht wird.

4. Verfahren nach einem der Ansprüche 1 bis3, wobei die gegenüber dem alten Datenbereich unveränderten Datenfelder im neuen Datenbereich beim Anlegen mit einem einheitlichen Wert beschrieben werden.

5. Computerprogrammprodukt mit Programmcodemitteln zum Durchführen des Verfahrens nach einem der vorangehenden Ansprüche, wenn das Computerprogrammprodukt auf einer Datenverarbeitungseinrichtung ausgeführt wird.

6. Computerprogrammprodukt nach dem Anspruch 5, das auf einem computerlesbaren Aufzeichnungsmedium abgespeichert ist.

7. Steuerung mit
einem Datenspeicher (120), der die Programmdaten eines laufenden Steuerungsprogramms enthält, die in Datenbereiche unterteilt sind,
einer Speicherverwaltungseinheit (140), die eine Verfügbarkeitstabelle (141) enthält, in der für jeden Datenbereich ein Verfügbarkeitsstatus gespeichert ist, und
eine Konfigurationseinheit (150), die ausgelegt ist, zum Ausführen eines Aktualisierens der Steuerung gemäß dem Verfahren nach einem der Ansprüche 1 bis 4.

## Claims

1. Method for updating a programmable logic controller during a running control program, wherein program data for the control program are divided into data areas with data fields, and each data area is assigned an availability status which is stored in an availability table and is checked before the control program accesses the data area,
wherein, while an unchanged control program runs, a changed control program is installed such that it is capable of running and new program data are loaded by creating further data areas with the new program data, wherein, if the new program data relate to a change in individual data fields of an old data area, an entire data area is newly created, the data fields affected by the change are initialized with the new program data and the new data area is assigned the availability status of unavailable,
wherein, after installation and loading have been completed, a changeover is made to the changed control program in a control program pause,
wherein, when executing the changed control program, before program data are accessed, the availability status of the associated data area is also checked in the availability table, wherein, if the availability status indicates that the data area is unavailable, the execution of the changed control program is interrupted and a copying operation is initiated in which the data fields of the new data area which have not been initialized are filled with the corresponding program data from the old data area, and
wherein, after the copying operation has been completed, the availability status of_ the new data area is set to available and the execution of the changed control program is continued at the interrupted point.

2. Method according to Claim 1, wherein a program data change is carried out in individual data fields in a plurality of the new data areas, and wherein a copying operation in which the data fields of the new data area which have not been initialized are filled with the corresponding program data from the old data area is carried out for at least one new data area in a control program pause.

3. Method according to Claim 1 or 2, wherein, after the copying operation has been completed, the data area to be changed is released and the associated availability status is deleted in the availability table.

4. Method according to one of Claims 1 to 3, wherein a standard value is written to the data fields in the new data area which are unchanged with respect to the old data area during creation.

5. Computer program product having program code means for carrying out the method according to one of the preceding claims when the computer program product is executed on a data processing device.

6. Computer program product according to Claim 5, which is stored on a computer-readable recording medium.

7. Controller having
a data memory (120) containing the program data for a running control program which are divided into data areas,
a memory management unit (140) containing an availability table (141) which stores an availability status for each data area, and
a configuration unit (150) which is designed to update the controller in accordance with the method according to one of Claims 1 to 4.

## Revendications

1. Procédé de mise à jour d'une commande programmable à mémoire pendant que le programme de commande est exécuté, dans lequel :
des données du programme de commande sont divisées en zones de données présentant des champs de données,
un statut de disponibilité est associé à chaque zone de données, est conservé en mémoire dans un tableau de disponibilités et est vérifié avant que le programme de commande accède à la zone de données,
un programme de commande modifié est installé de manière à pouvoir être exécuté pendant qu'un programme de commande inchangé est exécuté et de nouvelles données de programme sont saisies en créant d'autres zones de données avec les nouvelles données de programme,
une zone complète de données est nouvellement créée lorsque les nouvelles données de programme concernent une modification de certains champs de données d'une ancienne zone de données,
les champs de données concernés par la modification sont initialisés avec les nouvelles données de programme et le statut de disponibilité "non disponible" est associé à la nouvelle zone de données,
pendant une pause du programme de commande, on bascule sur le programme de commande modifié lorsque l'installation est terminée et après la saisie,
le statut de disponibilité de la zone de données concernée est vérifié dans le tableau de disponibilités lors de l'exécution du programme de commande modifié et avant l'accès aux données de programme,
lorsque le statut de disponibilité indique que la zone de données n'est pas disponible, l'exécution du programme de commande modifié est interrompue et une opération de copie dans laquelle les champs de données non initialisées de la nouvelle zone de données sont remplis par les données de programme correspondantes de l'ancienne zone de données est déclenchée,
le statut de disponibilité de la nouvelle zone de données est placé à "disponible" lorsque l'opération de copie est terminée et
l'exécution du programme de commande modifié est poursuivie à l'endroit où elle avait été interrompue.

2. Procédé selon la revendication 1, dans lequel une modification de données du programme de certains champs de données est exécutée sur plusieurs des nouvelles zones de données et une opération de copie dans laquelle les champs de données non initialisées de la nouvelle zone de données sont remplis par les données de programme correspondantes de l'ancienne zone de données est exécutée pour au moins une nouvelle zone de données au cours d'une pause du programme de commande.

3. Procédé selon les revendications 1 ou 2, dans lequel la zone de données à modifier est libérée lorsque l'opération de copie est terminée et le statut de disponibilité associé est effacé dans le tableau de disponibilités.

4. Procédé selon l'une des revendications 1 à 3, dans lequel les champs de données inchangés par rapport à l'ancienne zone de données sont écrits dans la nouvelle zone de données en y plaçant une valeur commune.

5. Produit de programme informatique doté de moyens de code de programme permettant d'exécuter le procédé selon l'une des revendications précédentes lorsque le produit de programme informatique est exécuté dans un dispositif de traitement de données.

6. Produit de programme informatique selon la revendication 5, apte à être conservé en mémoire sur un support lisible par ordinateur.

7. Commande dotée d'une mémoire de données (120) qui contient les données d'un programme de commande en cours divisée en zones de données, une unité (140) de gestion de mémoire qui contient un tableau (141) de disponibilités dans lequel un statut de disponibilité est conservé pour chaque zone de données et une unité de configuration (150) conçue pour exécuter une mise à jour de la commande en appliquant le procédé selon l'une des revendications 1 à 4.
